# EUROPÄISCHE PATENTSCHRIFT

(11) **EP 3 280 920 B1**
(45) Veröffentlichungstag und Bekanntmachung des Hinweises auf die Patenterteilung: **17.06.2020**
(21) Anmeldenummer: 16716470.6
(22) Anmeldetag: 29.03.2016
(51) Int. Cl.: F16B 1/00, F16B 4/00, F16D 1/00, F16D 1/08

(54) **REVERSIBLE VERBINDUNG VON MASCHINENBAUTEILEN**
REVERSIBLE CONNECTING OF MACHINE COMPONENTS
RACCORDEMENT RÉVERSIBLE DE COMPOSANTS MÉCANIQUES

(30) Priorität: 04.04.2015 EP 15000975
(43) Veröffentlichungstag der Anmeldung: 14.02.2018
(73) Patentinhaber: ESM Energie- und Schwingungstechnik Mitsch GmbH, 64646 Heppenheim (DE)
(72) Erfinder: MITSCH, Franz, 64646 Heppenheim (DE); HEINZ, Frank, 64646 Heppenheim (DE)
(74) Vertreter: Benz, Jürgen
(86) Internationale Anmeldenummer: PCT/EP2016/000524
(87) Internationale Veröffentlichungsnummer: WO 2016/162111

(56) Entgegenhaltungen:
- DE-A1-102007 049 901
- DE-U1- 9 408 956
- FR-A- 1 315 136

## Beschreibung

Die Erfindung betrifft durch ein Verdrängungsmedium sich verformende Werkstücke zur festen reversiblen Verbindung von Bauteilen.
Die Erfindung betrifft insbesondere einen Pressbolzen oder ein gleichwirkendes Werkstück, der bzw. das in seinem Inneren ein verdrängbares Material oder Materialgemisch aufweist, welches durch einen in das Material eindringenden Druckstempel reversibel unter hohem Druck komprimiert werden kann, so dass der Bolzen in seinem Außendurchmesser durch Erhöhung des Innendrucks im Bolzen aufgeweitet wird, wodurch eine sehr feste reversible Presspassung mit zu verbindenden Bauteilen unterschiedlicher Art, insbesondere aber von Wellen-Nabenverbindungen im Maschinenbau erreicht wird.

Das feste Verbinden von Bauteilen / Maschinenteilen ist eine grundsätzliche und immer wieder auftretende Aufgabe im Maschinenbau, die es entsprechend der jeweiligen technischen Aufgabe zu lösen gilt. Dabei ist es häufig erforderlich, dass Bolzen mit einer Presspassung so fest eingepresst werden, dass diese durch den Vorspanndruck und der dadurch entstehenden Reibung miteinander verbunden sind, so dass in der Presspassung so hohe Reibungskräfte entstehen, dass sich die Bolzen nicht von selbst lösen und somit axiale Kräfte und Torsions-Momente übertragen werden können.

Dies geschieht nach dem Stand der Technik durch Einpressen des Bolzens mit großen axialen Kräften in eine Bohrung.

Eine weitere Möglichkeit besteht darin, den Bolzen abzukühlen und/oder das Bauteil mit der entsprechenden Bohrung aufzuheizen. Durch das Schrumpfen des Bolzens bei Kälte bzw. das Weiten der Bohrung durch Wärme entsteht zwischen Bolzen und Bohrung ein Spalt, so dass der Bolzen eingeführt werden kann. Sobald die Bauteile ihre gemeinsame Temperatur erreicht haben entsteht damit eine Presspassung. Diese Presspassung ist nicht oder nur bedingt lösbar.

Es ist weiterhin bekannt, dass man Rohre unter hohem Innendruck "aufblasen" kann. Bisher wird dieses Verfahren tatsächlich nur im Rohrbereich angewendet. Das Aufblasen oder Weiten massiver Bolzen ist bislang nicht beschrieben worden.

Die bisherigen bekannten Methoden zur Verbindung von Bauteilen mittels Bolzen oder Dübeln haben in der Regel den Nachteil, dass die Verbindung, wenn einmal hergestellt, nicht ohne Zerstörung wieder gelöst werden kann. Oft werden dabei die Bauteile selbst in Mitleidenschaft gezogen. Ein Lösen der Verbindungen im Zusammenhang mit Austausch- oder Wartungsarbeiten in einer Anlage ist aber in vielen Fällen wünschenswert, insbesondere in Anlagen, wie z.B. Windkraftanlagen, die höhen Kräften ausgesetzt sind.

Es bestand somit die Aufgabe eine Verbindungsvorrichtung in Form eines Pressbolzens oder eines gleichwirkenden Bauteils zur Verfügung zu stellen, der in Bezug auf seine Verbindung nicht nur gegebenenfalls sehr fest, und somit sehr widerstandsfähig gegenüber hohen Kräften ist, sondern auch reversibel ist.

Die Aufgabe wurde durch Zurverfügungstellung eines Bauteils gemäß der Erfindung, wie sie im Folgenden und in den Ansprüchen näher beschrieben wird, gelöst.

Das erfindungsgemäße Bauteil ist ein unter Druck reversibel aufweitbares oder verformbares Werkstück, im einfachsten Fall ein Pressbolzen oder Hochdruckdübel. Es kann aber auch Teil einer Welle oder Achse sein, beispielsweise an einem Ende der Welle oder Achse, es kann aber auch ein integrierter Bestandteil eine Nabe, eines Planetengetriebes, bzw. Planetenanordnung sein mit den beschriebenen Merkmalen.

Das erfindungsgemäße Bauteil bzw. Werkstück umfasst im Wesentlichen einen im Wesentlichen zylindrischen oder ggf. konischen Grundkörper bzw. Bolzenkörper (8), der in seinem Inneren einen oder mehrere Hohlräume in Form einer oder mehrerer Bohrungen vorzugsweise in Richtung seiner Längsachse aufweist.

Diese Bohrung oder Bohrungen dienen erfindungsgemäß als Verdrängungsräume für Verdrängungsmedien. Der Verdrängungsraum oder die Verdrängungsräume können verschiedene Gestalt haben, vorzugsweise sind sie zylindrisch oder konisch mit spitzem oder flachem Ende oder aber auch ringförmig, beispielsweise versetzt nach innen entlang des Umfangs des Querschnitts des Grundkörpers. Die entsprechend geformte(n) parallel zur Längsachse des Grundkörpers angeordnete(n) Bohrung(en) ist / können konzentrisch oder auch regelmäßig oder unregelmäßig um die gedachte zentrale Achse des Grundkörpers oder Bolzens platziert sein, und sind zur Oberseite hin offen zur Einführung eines Druckstempels, welcher den jeweiligen Hohlraum, bzw. die Bohrung ganz oder teilweise ausfüllen kann und dabei das Verdrängungsmedium zusammenzupressen vermag. Der Druckstempel (4) wird mit entsprechenden Spann- und Druckmitteln, die den Abschluss der Bohrung bilden und mechanischer oder hydraulischer Art sein können, betätigt.

Der Druckstempel ist so gestaltet, dass er in den vorgesehenen Verdrängungsraum eingeführt und in diesen durch Verdrängung des vorhandenen Verdrängungsmediums zumindest teilweise ausfüllen kann. Der Druckstempel kann vorzugsweise zylindrisch geformt sein mit einem spitzen oder flachen Ende analog zu einem zylindrischen Verdrängungsraum oder aber ringförmig, so dass er in einen entsprechenden ringförmigen Verdrängungsraum passt. Der Druckstempel kann einen Durchmesser (d₂) aufweisen der maximal dem Durchmesser (d₁) des Verdrängungsraumes entspricht, jedoch muss in diesem Fall eine relative hohe Kraft ausgeübt werden, um im Inneren des Verdrängungsraumes einen bestimmten hohen Druck zu erzeugen. Vorteilhaft ist daher ein Druckstempel mit einem Durchmesser, der kleiner ist, als der Durchmesser des Verdrängungsraumes, für den der Druckstempel vorgesehen ist. Generell kann das Verhältnis d₁/d₂ 1 - 5, vorzugsweise 2.0 - 3.0 betragen.

Es ist, wie bereits erwähnt, denkbar, dass mehrere Verdrängungsräume bzw. Bohrungen oder Hohlräume entlang der, bzw. parallel zur Grundkörperachse vorhanden sind. In einer bevorzugten Ausführungsform ist der Grundkörper oder Bolzen mit einem konzentrisch angeordneten, im Wesentlichen zylindrischen Hohlraum oder Verdrängungsraum versehen, welcher mit einem entsprechenden Verdrängungsmedium gefüllt ist.

Über den Druckstempel und die Druckmittel kann somit das in den Hohlräumen befindliche Medium elastisch zusammengepresst, bzw. verdrängt werden, so dass der dabei entstehende Druck im Inneren der Bohrung radial gleichmäßig nach außen auf die Außenwand des Werkstückes. bzw. Bolzens übertragen wird, und dieses bzw. diesen durch Vergrößerung des Umfangs des bolzenförmigen Werkstücks verformt, welcher als Pressfläche (9) gegenüber dem umgebenden zu verbindenden Bauteil, beispielsweise eine Nabe (7), fungiert.

Erfindungsgemäß sind an die Materialeigenschaften des Grundkörpers (8) sowie des Verdrängungsmedium (6) spezielle Anforderungen zu stellen, damit aufgabegemäß eine sehr feste aber reversible und über einen großen Temperaturbereich verlässliche Verbindung mit dem zu verbindenden Bauteil sichergestellt werden kann.

Der Grundkörper oder Bolzenkörper sollte so beschaffen sein, dass er hohen Drücken mit einer gewissen Elastizität begegnet, damit bei Entspannung des Systems, also Verringerung des Druckes im Verdrängungsraums durch Herausziehen des Druckstempels, die ursprüngliche Form, bzw. der ursprüngliche Umfang des Grundkörpers und somit ein Lösen der festen Verbindung wieder erreicht wird.

Am besten eigenen sich Materialien oder Werkstoffe mit einem Elastizitätsmodul > 50.000 N/mm², vorzugsweise > 100.000 N/mm², > 150.000 N/mm², > 200.000 N/mm², > 250.000 N/mm², oder > 300.000 N/mm². Insbesondere sind Materialien mit einem Elastizitätsmodul zwischen 150.000 N/mm² und 300.000 N/mm² geeignet, wie beispielsweise Stähle oder Stahllegierungen oder Materialien, welche solche aufweisen, insbesondere zwischen 150.000 N/mm² und 250.000 N/mm², vorzugsweise zwischen 180.000 N/mm² und 220.000 N/mm².

Das Verdrängungsmedium, welches den Raum der Bohrungen (22) bzw. Hohlräume ausfüllt, sollte erfindungsgemäß ein deutlich geringeres Elastizitätsmodul und damit höhere Elastizität besitzen als der Grundkörper/Bolzenkörper selbst. Das Elastizitätsmodul des Verdrängungsmedium sollte erfindungsgemäß weniger als 20% des E-Moduls des Materials des Grundkörpers/Pressbolzens betragen, vorzugsweise jedoch weniger 15%, 10%, 5%, 1% oder 0.001% sein. Das ideale E-Modul des Verdrängungsmediums gemäß der Erfindung liegt zwischen 0.001% und 20%, insbesondere zwischen 0.001 und 10% des E-Moduls des umgebenden Grundkörpers.

Ein zur Lösung der gestellten Aufgabe geeignetes Verdrängungsmedium muss jedoch auch einen Wärme-Ausdehnungskoeffizienten besitzen, der von dem Ausdehnungskoeffizienten des Grundkörpers, also beispielsweise Stahl, idealerweise möglichst nicht oder nicht wesentlich abweicht, da sich sonst die bei einer bestimmtem Temperatur hergestellte Verbindung bei später eintretenden Temperaturunterschieden in der Anlage (zwischen -40°C und +60°C) wieder lösen oder lockern kann, bzw. im umgekehrten Fall in dem zu verbindenden Bauteil eine unzulässig hohe Flächenpressung entsteht, dass diese "aufgesprengt" wird, wodurch die Verbindung nicht mehr sichergestellt ist oder nur schwer wieder gelöst werden kann, falls dies, wie beispielsweise bei Austausch von Bauteilen, notwendig werden könnte.

Übliche Materialien, die gemäß der ersten Forderung ein deutlich geringeres E-Modul (< 30.000 N/mm², vorzugsweise < 10.000 N/mm², < 1.000 N/mm²) als der Grundkörper (8) aufweisen sollen, besitzen jedoch im Allgemeinen einen sehr viel höheren Ausdehnungskoeffizienten als die geeigneten Grundkörper-Materialen mit den geforderten E-Moduln zwischen 50.000 und 300.000 N/mm². Im Regelfall werden für den erfindungsgemäßen Grundkörper Stähle eingesetzt.

Daher war es auch Aufgabe der Erfindung solche Materialien als Verdrängungsmedium zur Verfügung zu stellen, welche ein deutlich kleineres E-Modul als das umgebende Material des Grundkörpers oder Bolzens (beispielsweise aus Stahl oder Stahllegierung) besitzen jedoch gleichzeitig einen insgesamt wirksamen *Wärmeausdehnungskoeffizienten* aufweisen, der *mit* dem Ausdehnungskoeffizienten des Bolzens/Grundkörpers (z.B. Stahl oder Stahllegierung) vergleichbar ist, also von letzteren um lediglich 0 - 10%, vorzugsweise 0 - 5%, abweicht. Solche Materialen als Verdrängungsmedium, welche erfindungsgemäß eingesetzt werden können, können auch Gemische verschiedener Materialien sein und werden weiter unter ausführlich offenbart und beschrieben.

Gegenstand der Erfindung ist somit ein durch Druck reversibel verformbares Werkstück, insbesondere in Form eines Pressbolzens, eines Dübels, einer Welle, einer Achse, einer Nabe, eines Teils einer Welle oder Achse , eines Teils einer Nabe, oder eines Bauteils im Zusammenhang mit einer Kupplung oder einem Planetenträger oder Planetengetriebe, zum festen reversiblen Verbinden von Maschinenbauteilen umfassend:
(i) einen im Wesentlichen zylindrischen Grundkörper (8), der auf seinem Umfang eine Pressfläche (9) zu einer Fläche des zu verbindenden Maschinenbauteils (7) aufweist,
(ii) mindestens einen Verdrängungsraum (22) (23) im inneren des Grundkörpers, welcher mit einem in Pulverform oder granulierter Form vorliegenden Verdrängungsmedium (6)(6a) ganz oder teilweise ausgefüllt ist,
(iii) Druck- und Spannmittel (1) (2) (3) (5) (14) - (20), sowie
(iv) mindestens einen Druckstempel (4) der in Form und Größe so gestaltet ist, dass er mittels der Druck- und Spannmittel in den Verdrängungsraum eingeschoben werden kann, um das dort befindliche Verdrängungsmedium zusammenzupressen, wodurch eine Aufweitung des Umfangs des Grundkörpers über die Pressfläche (9) erfolgt und so eine sehr feste reversible Verbindung mit dem zu verbindenden Maschinenbauteil entsteht,
dadurch gekennzeichnet, dass das in dem mindestens einem Verdrängungsraum eingesetzte Verdrängungsmedium ein insgesamt wirksames Elastizitätsmodul von maximal 25%, vorzugsweise von maximal 20% des Elastizitätsmoduls des Materials des Grundkörpers (8) aufweist, bzw. vorzugsweise 0.001% - 15% des E-Moduls des Grundkörpers beträgt, und einen insgesamt wirksamen Ausdehnungskoeffizienten besitzt, der von dem Ausdehnungskoeffizienten des Grundkörpers um maximal 10% , vorzugsweise um 0 - 5% abweicht, wobei das Verdrängungsmedium eine einzige Komponente ist oder ein Gemisch ist aus mindestens zwei Komponenten mit jeweils unterschiedlichen Elastizitätsmodulen und/oder Ausdehnungskoeffizienten.

Aus der DE 10 2007 049 901 A1 ist ein Werkstück mit den Merkmalen der Präambel des Anspruchs 1 bekannt.

Um der Forderung nach einem geeigneten Ausdehnungskoeffizienten des Verdrängungsmediums gerecht zu werden, ist es erfindungsgemäß auch möglich mehrere Verdrängungsräume zur Verfügung zu stellen, welche, mit Materialien mit unterschiedlichen Ausdehnungskoeffizienten gefüllt sind, wobei der gesamt wirkende Ausdehnungskoeffizient die oben genannte Bedingung erfüllen muss, nämlich nicht mehr als 10% vom Ausdehnungskoeffizienten des Materials des Grundkörpers bzw. Bolzens abzuweichen. Somit ist auch Gegenstand der Erfindung ein entsprechendes Werkstück, bei dem der Grundkörper (8) einen ersten Verdrängungsraum (22) mit einem Verdrängungsmedium (6) und mindestens einen zweiten Verdrängungsraum (23) mit einem Verdrängungsmedium (6a) aufweist, wobei das erste Verdrängungsmedium einen anderen Ausdehnungskoeffizienten aufweist als das zweite, insbesondere aber einen höheren Ausdehnungskoeffizienten aufweist als der Grundkörper (8) und das zweite Verdrängungsmedium einen niedrigeren Ausdehnungskoeffizienten besitzt als der Grundkörper. In diesem Fall wurde gefunden, dass die besten Ergebnisse erzielt wurden, wenn das Verdrängungsmedium mit dem niedrigeren Ausdehnungskoeffizienten einen Wert von <11.0 x 10⁻⁶ / K, vorzugsweise < 2.0 x 10⁻⁶ / K aufweist.

In einer besonderen Ausführungsform der Erfindung ist der Grundkörper mit einem ersten Verdrängungsraum (22) von ringförmiger Gestalt ausgestattet, der entlang des Umfangs des Grundkörpers (8) im Inneren angeordnet ist, und mit einen zweiten Verdrängungsraum (23) ausgestattet, der die Form eines Hohlzylinders besitzt und konzentrisch platziert ist, wobei der erste ringförmigen Verdrängungsraums (22) um den zweiten Verdrängungsraum (23) herum angeordnet ist. Es ist aber auch denkbar, dass der Grundkörper mit einem ersten äußeren Ring von Hohlzylindern die radial im zylindrischen Grundkörper angeordnet sind, und einen zweiten inneren Ring von Hohlzylindern oder einen einzigen konzentrischen Hohlzylinder ausgestattet ist. Durch entsprechende Wahl der Verdrängungsmedien kann somit eine größere Flexibilität an E-Moduln und Ausdehnungskoeffizienten erreicht werden, um die gewünschten Resultate zu erzielen.

Bei Verwendung mehrere Verdrängungsräume können auch mehrere Druckstempel bzw. als Druckstempel fungierende Vorrichtungen eingesetzt werden, was sich positiv auf die Druckverteilung und somit auf die gleichmäßige Aufweitung des Bolzens/Grundköpers auswirken kann.

Auch an die Geometrie der Bohrungen/Hohlräume/Verdrängungsräume in Bezug auf den sie umgebenden Grundkörper oder Bolzen sind erfindungsgemäß bestimmte Anforderungen gestellt.

So ist eine Bohrung im Inneren des Werkstückes bzw. Pressbolzens entlang der Längsachse des Bauteils vorzugsweise kürzer als der Pressbolzen bzw. der Grundkörper selbst und besitzt eine Länge (l₂), die größer, gleich oder auch kürzer als die Länge (l₁) ist, welche der gemeinsamen Fläche von Bolzen bzw. Grundkörper und umgebenden zu verbindenden Bauteil entspricht. Nur so kann eine gleichmäßige Druckverteilung auf die Verbindungsfläche erreicht werden. Optimale Ergebnisse können erzielt werden, wenn besagte Längenverhältnisse im folgenden Bereich vorliegen: l₂ = 0.75 l₁ bis 1.25 l₁. Idealerweise ist l₂ etwa 13 - 15% größer als l₁. Des Weiteren ist es vorteilhaft, den Auslauf der Bohrung spannungsoptimiert zu gestalten.

Weist das Werkstück nur eine Bohrung auf, so ist diese vorzugsweise konzentrisch angeordnet. Das Werkstück kann aber, wie bereits erwähnt, auch mehrere Bohrungen mit Druckstempeln und Spann-/Druckvorrichtungen aufweisen. In diesem Fall sind die Bohrungen entlang des Umfangs des zylindrischen Werkstückes radial vorzugsweise gleichmäßig oder gleichwirkend verteilt.

Eine weitere wichtige geometrische Anforderung an das erfindungsgemäße Werkstück ist, dass die durch den Druckstempel und das Verdrängungsmedium übertragenen Drücke ausreichend auf die Pressfläche (9) übertragen werden können, so dass die entsprechende Außenfläche reversibel geweitet wird. Nur dadurch kann eine feste, auf Reibspannung basierende Verbindung mit der entsprechenden Fläche des umgebenden Bauteils erzielt werden.

Um dies zu gewährleisten, ist es erfindungsgemäß notwendig, dass der Durchmesser der vorzugsweise zylindrischen Bohrung (d₁) und der Abstand der Bohrung (= Außenfläche des Verdrängungsraumes (22) (23)) zur Außenfläche des vorzugsweise zylindrischen Grundkörpers (l₃) in einem bestimmten Verhältnis zueinander stehen. Es wurde gefunden, dass, wenn das Verhältnis (l₃) / (d₁) 0.05 bis 3, vorzugsweise 0.125 bis 1,5 beträgt, die reversible Aufweitung für ein bestimmtes mit einer definierten Kraft gepressten Verdrängungsmedium, optimal ist.
Gegenstand der Erfindung ist somit ein entsprechendes Werkstück, bzw. ein entsprechender Bolzen usw. bei dem das Verhältnis Entfernung (l₃) zwischen Pressfläche (9) und Außenfläche Verdrängungsraum (22)(23) zu Durchmesser (d₁) des Verdrängungsraums (22)(23) 0.05 bis 3, vorzugsweise 0.125 bis 1.5 beträgt.

Eine weitere geometrische Anforderung ist, dass der Durchmesser des Druckstempels (d₂), welcher Verdrängungsmedium verdrängen soll, in einem bestimmten Verhältnisbereich zum Durchmesser des Verdrängungsraums (d₁) stehen sollte, um optimale Ergebnisse erzielen zu können.

Gegenstand der Erfindung ist somit auch ein entsprechendes Werkstück, bzw. ein entsprechender Bolzen usw. bei dem das Verhältnis Durchmesser (d₁) des Verdrängungsraums (22)(23) zu Durchmesser (d₂) des Druckstempels (4) 1.01 bis 5.0, vorzugsweise 2 bis 3.5 beträgt.

Der Grundköper (8) muss starke Drücke aushalten aber prinzipiell nicht unelastisch sein. Daher sollte er aus einem Material mit einem Elastizitätsmodul in einem Bereich zwischen 70.000 und 300.000 N/mm² bestehen. Vorzugsweise besteht er aus Stahl oder einer Stahllegierung oder einem Material, welches Stahl oder Stahllegierung enthält mit einem E-Modul zwischen 180.000 und 220.000 N/mm².

Das für die beschriebenen Hohlräume / Verdrängungsräume verwendete Verdrängungsmedium (6) (6a) sollte, wie eingangs definiert, ein insgesamt wirksames Elastizitätsmodul von maximal 20% des Elastizitätsmoduls des Materials des Grundkörpers (8) aufweisen, gleichzeitig aber auch einen Ausdehnungskoeffizienten, der dem des Grundkörpers sehr ähnlich ist, und nicht mehr als 10% davon abweicht.

Dies kann durch eine einzige Materialkomponente nur selten erreicht werden, wie aus Tab. 1 zu entnehmen ist.

**Tab. 1: Elastizitätsmodule und Wärmeausdehnungskoeffizienten von verschiedenen Werkstoffen**

| **Material** | **E-Modul (N/mm²= MPa)** | (Längen)-**Ausdehnungskoeffizient (10⁻⁶/K)** |
|---|---|---|
| Stähle | 180.000-215.000 | 11-16 |
| Invar(Eisen-Nickel L.) | 140.000-150.000 | 1.5-2.5 |
| Eisen | 195.000 | 12-13 |
| Aluminium | 70.000 | 23-24 |
| Kupfer | 140.000 | 16-17 |
| Nickel | 215.000 | 13 |
| Graphit | 27.000 | 2 |
| Quarzglas | 95.000 | 0.5 |
| Gläser, Porzellan | 40.000-90.000 | 3-9 |
| Glaskeramik | 90.000-100.000 | <0.5 |
| Beton, Zement | 22.000-45.000 | 12 |
| Silizium | 107.000 | 2-3 |
| Kunststoffe | 1.000-5.000 | 50-180 |
| Gummi(Naturkautschuk) | 10-100 | 160-220 |
| Holz | 500-16.000 | 7-9 |
| Carbonfasern | 70.000-300.000 | -0.1 |
| Glasfasern | 7.000-90.000 | 5 |

Daher sind Gegenstand der Erfindung auch entsprechende Werkstücke bei dem das Verdrängungsmedium (6) (6a) ein Gemisch aus mindestens zwei Komponenten mit jeweils unterschiedlichen Elastizitätsmoduln und / oder Ausdehnungskoeffizienten ist, wobei diese jeweils so gewählt sind, dass das Gesamt-E-Modul und der Gesamt-Ausdehnungskoeffizient die oben und in den Ansprüchen genannten Werte bzw. Bereiche annimmt.

In einer bevorzugten Ausführungsform ist das Verdrängungsmedium (6) (6a) ein binäres oder ternäres Gemisch. Alternativ besteht die Möglichkeit, zwei oder drei verschiedene Verdrängungsmedien mit unterschiedlichen E-Moduln und / oder Wärmeausdehnungskoeffizienten in entsprechenden zwei oder drei Verdrängungsräumen (22) (23) einzusetzen.

Es hat sich gezeigt, dass besonders gute Ergebnisse erzielt werden können, wenn zumindest ein Verdrängungsmedium oder zumindest eine Komponente eines Verdrängungsmedium ein Material oder Werkstoff ausgewählt aus der folgenden Gruppe ist: Graphit, Quarzglas, Glasfaser, Eisen-Nickel-Legierung, ein Kunststoff, ein Kunststoffgemisch oder ein Elastomer.

Es hat sich weiter gezeigt, dass besonders gute Ergebnisse erzielt werden können, wenn zumindest ein erstes Verdrängungsmedium oder zumindest eine Komponente davon Graphit, Quarzglas, Glasfaser oder Eisen-Nickel-Legierung aufweist, und ein zweites Verdrängungsmedium oder eine zweite Komponente des ersten Verdrängungsmediums ein Kunststoff, ein Kunststoffgemisch oder ein Elastomer ist, und der Grundkörper (8) im Wesentlichen aus einem Material mit einem E-Modul zwischen 70.000 und 300.000 N/mm² besteht. In einer bevorzugten Ausführungsform hierzu besteht der Grundkörper im Wesentlichen aus Stahl oder Stahllegierung mit einem E-Modul zwischen 180.000 und 220.000 N/mm² und einem Ausdehnungskoeffizienten zwischen 10 und 20 x 10⁻⁶ / K.

In einer weiteren Ausführungsform ist das Verdrängungsmedium ein binäres Gemisch, wobei die beiden Komponenten ausgewählt sind aus der Gruppe bestehend aus:
(i) Polyester, PVC oder Elastomer und Quarzglas oder Glasfaser
(ii) Polyester, PVC oder Elastomer und Eisen-Nickel-Legierung
(iii) Polyester, PVC oder Elastomer und Graphit
(iv) Epoxidharz und Graphit
(v) Glykole oder Öle und Graphit.

Die beiden Komponenten können auch, wie geschildert, in getrennten Verdrängungsräumen untergebracht sein.

Besonders vorteilhaft haben sich Verdrängungsmedien erwiesen, die Graphit und / oder Quarzglas enthalten in einem Bereich von 60 - 98%, vorzugsweise 75 - 90% Graphit oder Quarzglas oder Eisen-Nickel-Legierung.

Die erfindungsgemäßen Werkstücke sind vor allem vorgesehen für:
(i) die feste Montage und zerstörungsfreie Demontage von Maschinenbauteilen in Vorrichtungen und Anlagen, welche mittleren bis großen Kräften ausgesetzt sind,
(ii) Herstellung von Wellen-Naben-Verbindungen,
(iii) den Einbau in Windkraftanlagen.

Somit sind auch Gegenstand der Erfindung Windkraftanlagen oder andere technische, großen Kräften ausgesetzte Maschinen oder Anlagen.

Im Folgenden wird die Erfindung näher beschrieben.

| | |
|---|---|
| 1 | Druckring |
| 2 | Spannschraube |
| 3 | Befestigung Druckstempel |
| 4 | Druckstempel |
| 5 | Verschluss Element |
| 6 | Erstes Verdrängungsmedium, hydraulischer Verdrängungswerkstoff |
| 6a | Zweites Verdrängungsmedium, hydraulischer Verdrängungswerkstoff |
| 7 | Nabe |
| 8 | Bolzen, Grundkörper |
| 9 | Pressfläche |
| 10 | Druckring für Umfangs Pressbolzen |
| 11 | Klemmeinheit pro Achse |
| 12 | Achse mit mehreren Mehrere Klemmeinheiten |
| 13 | Dichtung für dünnflüssige Medien |
| 14 | Druckschraube |
| 15 | Vorspann-Weg |
| 16 | Vorspannhülse |
| 17 | Sicherungsblech |
| 18 | Sicherungsschraube |
| 19 | Hydraulikzylinder |
| 20 | Befestigungsschraube |
| 21 | Montagehilfe |
| 22 | Erster Verdrängungsraum |
| 23 | Zweiter Verdrängungsraum |

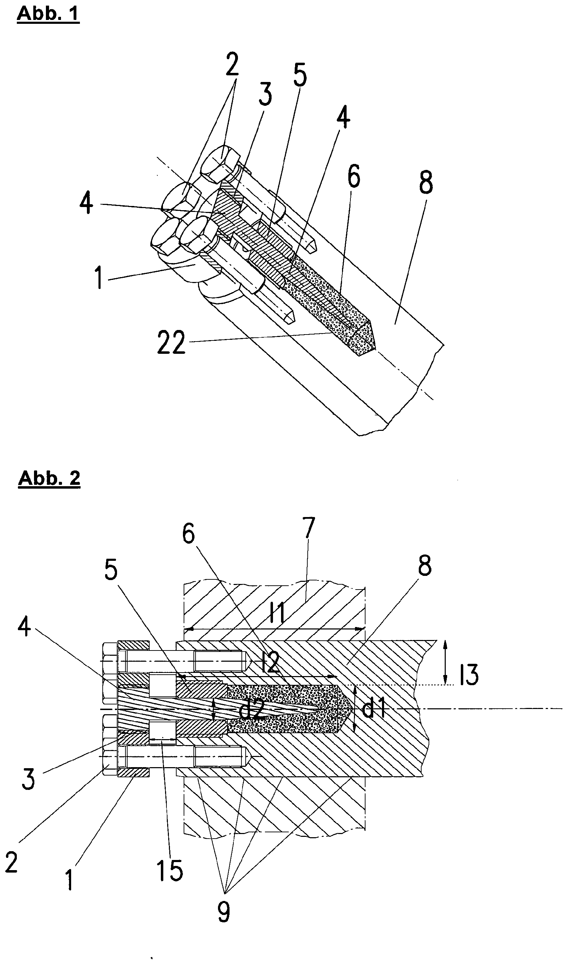

Abb. 1 bis Abb. 9 zeigen einen typischen Bolzen gemäß der Erfindung im Schnitt.

In einen Bolzen wird beispielsweise eine Bohrung mit einem Durchmesser-Verhältnis von etwa 1,25-4 (Verhältnis Außendurchmesser zu Bohrungsdurchmesser) eingebracht. Dies entspricht bei einem Außendurchmesser des Bolzens von 100 mm einer Bohrung, die in einem Bereich von 25 mm bis 80 mm liegt. In diese Bohrung wird ein Medium (hydraulischer Verdrängungs-Werkstoff Position 6) eingebracht. Dieses Medium wird mit dem Druckstempel Position 4 soweit verdichtet, dass in dem Bolzen ein hoher Druck entsteht. Der Durchmesser des Druckstempels Position 4 ist idealerweise kleiner als der Durchmesser (d1), in dem der hydraulische Verdrängungs-Werkstoff eingebracht ist (Durchmesser-Verhältnis 2,5-3,75). Denn je kleiner der Durchmesser (d2) des Druckstempels gewählt wird, desto höher ist der sich einstellende Druck im Inneren des Bolzens, bei gleichbleibender Kraft mit der der Druckstempel in das Medium eingepresst wird. Es sind aber durchaus Bohrungen mit einem Durchmesser Verhältnis von 1-5 denkbar. Dies entspricht bei einem Bohrungsdurchmesser von 60 mm einem Durchmesser des Druckstempels von 12 bis 60 mm. Bei der Verwendung eines Druckstempels mit kleinem Durchmesser entsteht ein großes Druckverhältnis, so dass der Druckstempel aus festem Material mit größer 1000 N/mm² bestehen muss.

Es ergeben sich Größenänderungen des Außendurchmessers je nach Bedingungen von bis zu 0,25% . Das heißt, dass sich bei einem Ausgangsdurchmesser von 100 mm nach der Aufweitung ein Außendurchmesser von 100,25 mm einstellt. Die Aufweitung kann hierbei über den Eintauchweg genau gesteuert werden. Die erreichbaren Größenordnungen der Aufweitung sind für eine Presspassung ausreichend.

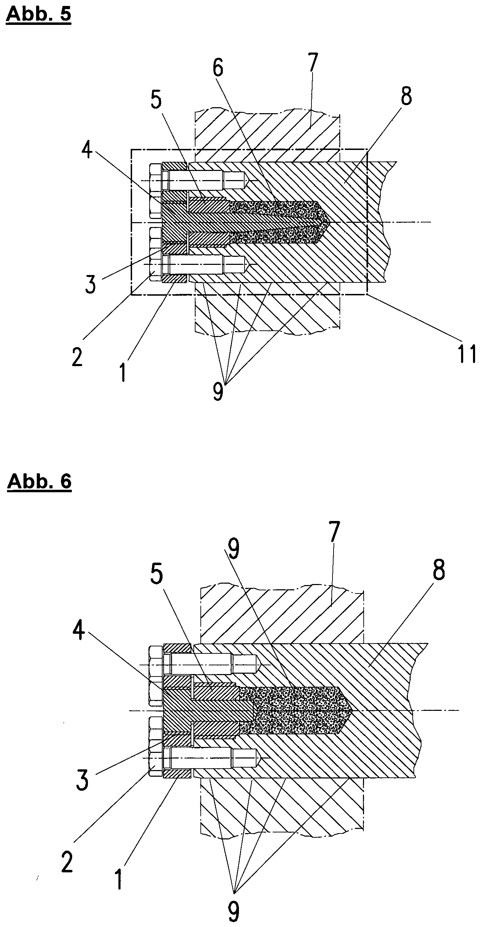

In den Zeichnungen sind unterschiedliche Möglichkeiten dargestellt. So ist zum Beispiel der Druckstempel Position 4 in den Abbildungen 1 - 5 und 8 mit einer Spitze ausgeführt, während in Abb. 6 ein stumpfer Stempel verwendet wird. Der stumpfe Stempel hat den Nachteil, dass nach Herausziehen des Stempels die Rückstellung der Ausdehnung nur teilweise erfolgt. Deshalb ist es vorteilhaft, den Druckstempel mit einer Spitze oder einer gerundeten Spitze zu versehen oder am unteren Ende konisch zu verjüngen. Dadurch wird beim Herausziehen des Stempels das Verdrängungsmedium (6) stärker zurückgedrückt als bei Verwendung eines stumpfen Stempels analog Abb. 6.

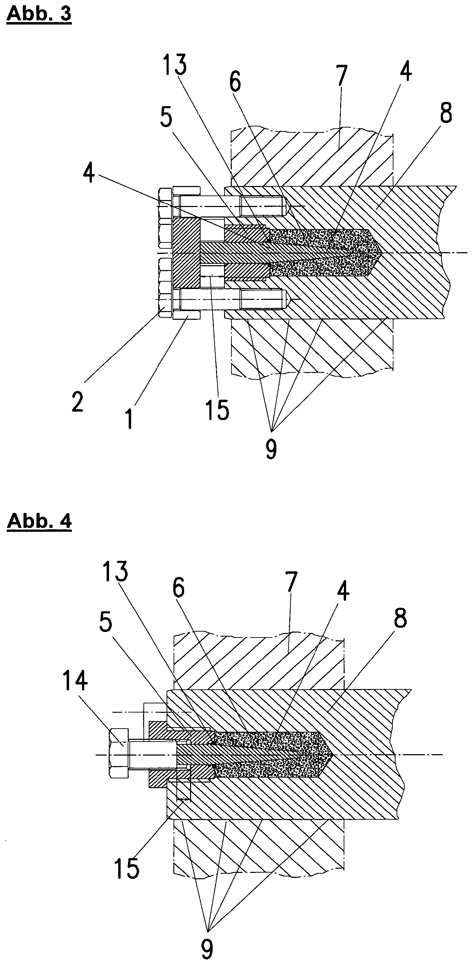

Der Druckstempel (4) wird entweder mit mehreren kleineren Schrauben über eine Druckplatte Position 1 eingepresst oder aber wie in Abb. 4 dargestellt mit einer einzelnen Schraube größeren Durchmessers.

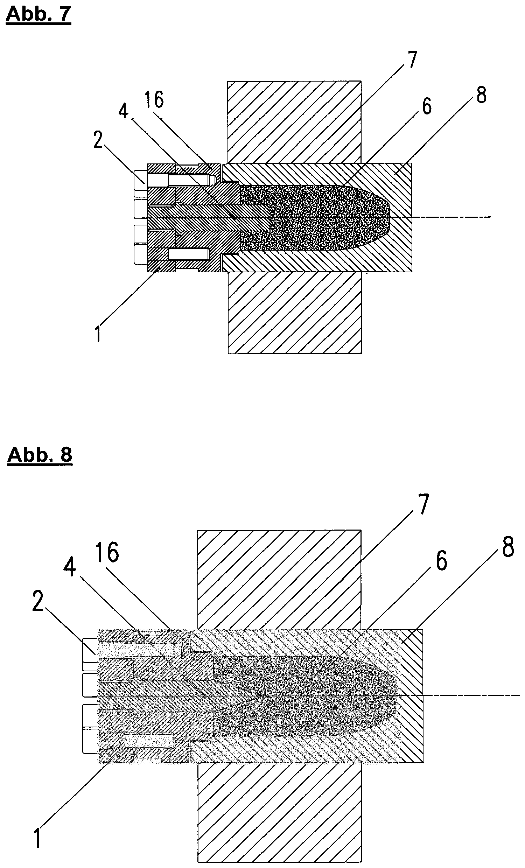

Abb. 7 und Abb. 8 zeigt eine Variante mit einem größeren Bohrungsdurchmesser.. Bei dieser Variante sind die Gewindebohrungen nicht mehr im Bolzen, sondern in der Vorspannhülse, Position 16, eingebracht. Die Vorspannhülse ist mit dem Bolzen verschraubt. Der Auslauf der Bohrung ist so ausgelegt, dass die Spannungen, die infolge der Aufweitung entstehen, auf ein Mindestmaß reduziert werden.

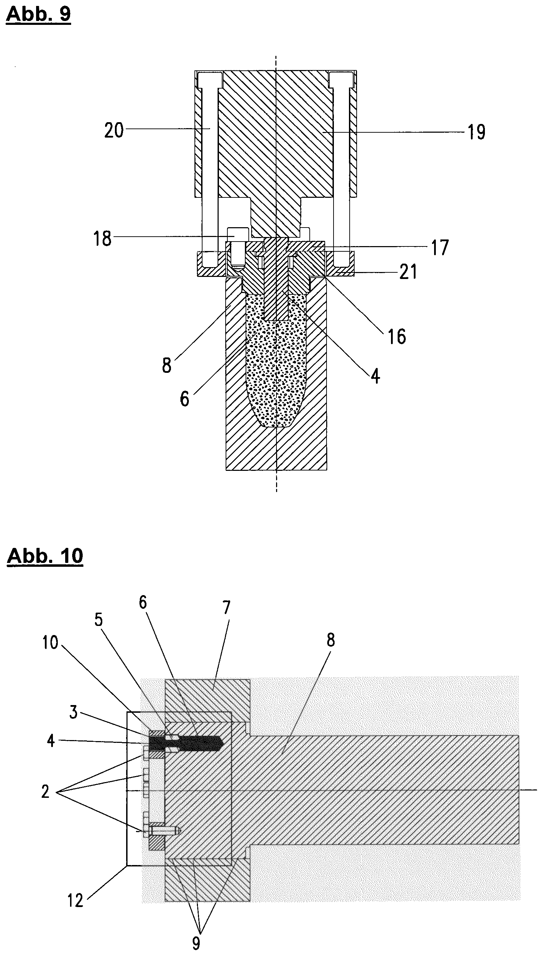

Eine weitere Möglichkeit ist, den Druckstempel hydraulisch über einen Rundblockzylinder, wie in Abb. 9 gezeigt, in das Medium einzupressen und den Druckstempel über mehrere kleine Schrauben mit einem Sicherungsblech Position 17 gegen Herauswandern zu sichern. Der Rundblockzylinder wird über ein Außengewinde an der Vorspannhülse, Position 16 befestigt. Ein Vorteil dieser Variante ist die vereinfachte und kürzere Montage.

Für den Fall, dass der Druckstempel (4) nicht von alleine aus dem Medium (6) herauskommt, ist eine Befestigung an dem Druckstempels Position 3 vorgesehen, mit welcher der Stempel aus dem Medium herausgezogen werden kann, um die Ausdehnung rückgängig machen zu können.

Idealerweise ist das Medium ein Werkstoff, der einen deutlich geringeren Elastizitätsmodul als Stahl hat. Leider haben solche Werkstoffe im Allgemeinen einen sehr viel höheren Wärme-Ausdehnung-Koeffizienten als Stahl. Das hat zur Folge, dass die Presspassung durch die unterschiedliche Ausdehnung gestört wird, so dass bei besonders niederen Temperaturen der Bauteile die Pressung versagen würde. Durch den größeren Wärmeausdehnungskoeffizienten schrumpft das Medium stärker als der Bolzen selbst, sodass durch dieses Verhalten der Druck im Inneren der Bohrung nachlässt und somit die Aufweitung zurückgeht und dementsprechend die Presspassung versagen würde.

Infrage kommen fließfähige Werkstoffe mit möglichst geringer Wärmeausdehnung wie zum Beispiel Polyester oder PVC.

Solche Werkstoffe haben einen Ausdehnungskoeffizienten von 50-80 x 10⁻⁶ / K (Gummi beispielsweise hat einen Ausdehnungskoeffizienten von etwa 200 x 10⁻⁶ / K). Stahl hat zum Vergleich einen Ausdehnungskoeffizienten der in einem Bereich von 11-13 x 10⁻⁶ / K liegt. Somit sind auch solche Werkstoffe noch nicht geeignet, die Verbindung bei Temperaturschwankungen zu gewährleisten.

Die erfindungsgemäße Lösung ist jetzt, einen zweiten Werkstoff mit besonders geringem Temperatur-Ausdehnungskoeffizient zu verwenden und diesen mit einem fließfähigen Werkstoff im entsprechenden Verhältnis zu mischen.

Ein Beispiel ist Quarz-Glas-Mehl, welches einen Ausdehnungskoeffizienten von etwa 0,5 x 10⁻⁶ / K aufweist. Wird dieses Quarz-Glas-Mehl in Polyester mit dem entsprechenden Verhältnis eingerührt, so kann der Wärmeausdehnungskoeffizient des Polyester-Glas-Gemisches auf den Wert von Stahl korrigiert werden.

Weiterhin ist es möglich einen zusätzlichen Hohlraum mit einem Werkstoff mit besonders geringer Wärmeausdehnung aufzufüllen. Dazu kann ebenso Quarzglas verwendet werden, sowie annähernd jedes Material welches einen sehr kleinen Wärmeausdehnungskoeffizient aufweist.

Darüber hinaus kann auch der Werkstoff Invar® verwendet werden, der aus 64 % Eisen und 36 % Nickel besteht, oder ähnliche Werkstoffe. Dieser hat einen Ausdehnungskoeffizienten von etwa null. Auch ist es möglich, Invar Staub oder Pulver zu den Medien mit höheren Ausdehnungskoeffizienten beizumischen und damit den Ausdehnungskoeffizienten des umgebenden Stahls zu erreichen.

Als sehr geeignete Werkstoffkombination hat sich erfindungsgemäß eine Elastomer-Graphitmischung erwiesen. Wie Invar® oder Glas hat auch Graphit einen sehr niedrigen Wärmeausdehnungskoeffizienten (2 x 10⁻⁶ / K) und eignet sich aus diesem Grund wie auch Invar oder Glas besonders gut zur Mischung mit einem fließfähigen Werkstoff, der einen hohen Wärmeausdehnungskoeffizient besitzt.

Ein großer Vorteil von Graphit gegenüber Glas und Invar® ist die sehr gute Selbstschmierung. Dieses Verhalten führt zu einer deutlichen Reduktion der Reibkräfte. Des Weiteren hat sich gezeigt, dass sich Graphit bereits im ungemischten verdichteten Zustand als hydraulischer Verdrängungs-Werkstoff eignet. Die Tatsache, dass sich Graphit bereits ohne Zumischung eines fließfähigen Werkstoffes als hydraulischer Verdrängungs-Werkstoff eignet, stellt einen weiteren Vorteil des Werkstoffes Graphit dar. So dass bei diesem Werkstoff, ein Material benötigt wird, dass dem Graphit im entsprechendem Verhältnis zugemischt wird, um den Wärmeausdehnungskoeffizient von Graphit zu erhöhen. Bei den anderen genannten Werkstoffkombinationen hingegen, wird ein Material mit niedrigem Wärmeausdehnungskoeffizient benötigt, um den Ausdehnungskoeffizient herabzusetzten. So kann beispielsweise ein Gummi oder ein synthetisches Elastomer dem Graphit zugemischt werden.

Neben Gummi sind aber auch andere Elastomere mit Wärmeausdehnungskoeffizienten, die in einem Bereich von 100-230 x 10⁻⁶ / K liegen geeignet.

Versuche haben gezeigt, dass neben Graphit alle Materialien möglich sind, die einen niedrigen Ausdehnungskoeffizienten und hohe Gleit- bzw. Schmiereigenschaften aufweisen. Auch ist es möglich, das Medium aus Graphit und Epoxidharz im entsprechenden Verhältnis herzustellen.

Eine weitere Möglichkeit den Wärmeausdehnungskoeffizient von Graphit auf den Wert von Stahl zu korrigieren, ist die Zugabe von Flüssigkeiten sowie Ölen wie zum Beispiel Hydrauliköl oder Glykol, Paraffin (Paraffinöl), Petroleum, Terpentinöl oder Silikonöl.

Durch die einfache Handhabung bezüglich Montage und zerstörungsfreier Demontage und dem geringen Bauraum ist die hier vorgestellte Erfindung, mit der Axialkräfte sowie Torsionsmomente übertragen werden können, für nahezu alle Welle-Nabenverbindungen im Maschinenbau einsetzbar.

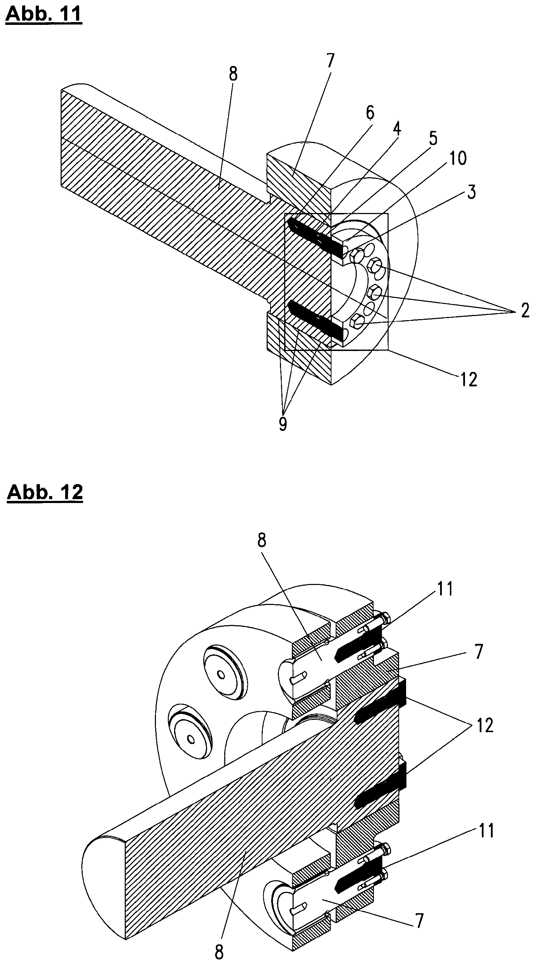

Abbildungen 1-9 zeigen Elemente, die einen Bolzen mit überschaubarem Durchmesser aufblähen. Eine weitere Methode ist in Abb. 10 und Abb.11 beschrieben. Bei dieser Methode werden mehrere Klemm-Einheiten (11) in Abb. 5 am Umfang angeordnet. Diese bewirken ein radiales Ausdehnen der Achse, so dass auch hiermit eine Fixierung des Bolzens (8) in der Nabe (7) ermöglicht wird. Dabei entsteht auf der Achse ein welliger Außendurchmesser, der im Bereich der Elemente größer ist als zwischen den Elementen. Diese Welligkeit wird durch den Widerstand der Nabe (7) reduziert

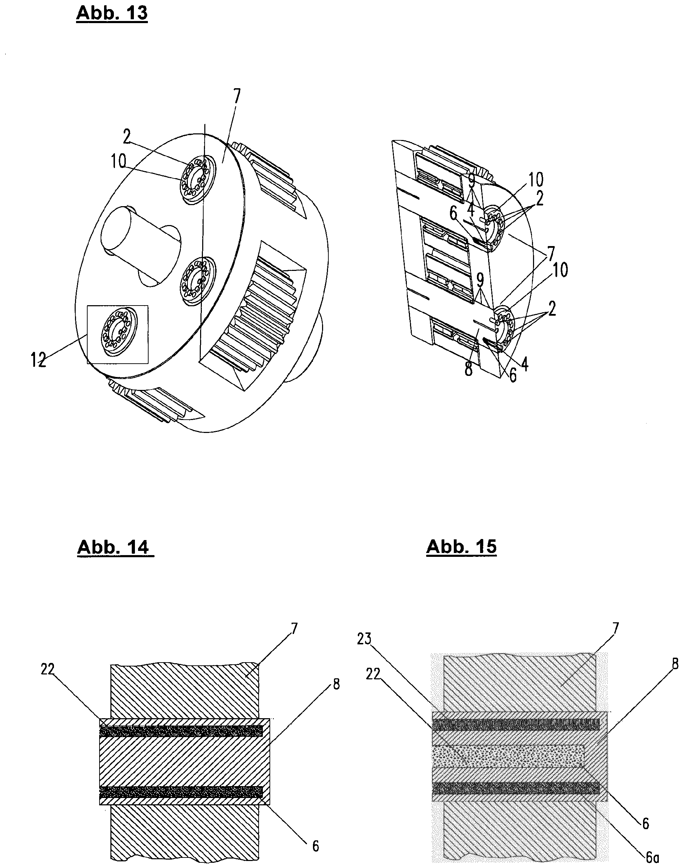

Abbildungen 12 und 13 zeigen weitere Einsatzfelder der Elemente.

In Abb. 12 ist eine Kupplung dargestellt, bei der die einzelnen Elemente mit einer KlemmEinheit pro Achse mehrfach am Umfang angeordnet sind. In der gleichen Abbildung ist der innere Bolzen mit mehreren Elementen am Umfang in der Nabe (7) fixiert.

Abb. 13 zeigt die Anwendung beim Einsatz in einem Planetenträger / Planetenlager, wie dies beispielsweise der EP13004936. 4beschrieben wurde. Die Fixierung des Bolzens mit den oben beschriebenen Elementen ist hierbei ein sehr großer Vorteil, da der gesamte Planetenträger mit dieser Konstruktion zerlegbar wird, so dass die Wälzlager und die in besagter Anmeldung beschriebenen Elastomerlager einfacher getauscht werden können. Nach dem bisherigen Stand der Technik werden derartige Bolzen mit einer Kalt-warm-Press-Verbindung montiert und sind somit nicht mehr zerstörungsfrei lösbar.

Abbildungen 14 und 15 zeigen einen erfindungsgemäßen Pressbolzen, welcher einen ringförmigen Verdrängungsraum (22) im Außenbereich des Bolzens bzw. Grundkörpers(8) aufweist. Dieser ist mit einem Verdrängungsmedium ganz oder teilweise gefüllt. Abb. 15 stellt somit eine Alternative zu Abb. 1 oder Abb. 2 dar, bei denen der Verdrängungsraum (22) ein konzentrisch positionierter Hohlzylinder ist. Abb. 14 stellt einen Pressbolzen dar, bei dem zusätzlich ein zweiter Verdrängungsraum (23) vorhanden ist, der hier als konzentrisch angeordneter Hohlzylinder ausgebildet ist. Bei dieser Ausführungsform wird vorzugsweise der Druckstempel (4) für die ringförmige Öffnung des ersten Verdrängungsraumes vorgesehen und mit der entsprechenden Geometrie versehen. Es kann auch umgekehrt der mittige Hohlraum als Pressraum für den Druckstempel vorgesehen werden.

## Patentansprüche

1. Durch Druck reversibel verformbares Werkstück zum festen reversiblen Verbinden von Maschinenbauteilen umfassend:
(i) einen im Wesentlichen zylindrischen Grundkörper (8), der auf seinem Umfang eine Pressfläche (9) zu einer Fläche des zu verbindenden Maschinenbauteils (7) aufweist
(ii) mindestens einen Verdrängungsraum (22) (23) im inneren des Grundkörpers, welcher mit einem-in Pulverform oder granulierter Form vorliegenden Verdrängungsmedium (6)(6a) ganz oder teilweise ausgefüllt ist,
(iii) Druck- und Spannmittel (1) (2) (3) (5) (14) - (20), sowie
(iv) mindestens einen Druckstempel (4) der in Form und Größe so gestaltet ist, dass er mittels der Druck- und Spannmittel in den Verdrängungsraum eingeschoben werden kann, um das dort befindliche Verdrängungsmedium zusammenzupressen, wodurch eine Aufweitung des Umfangs des Grundkörpers über die Pressfläche (9) erfolgt und so eine sehr feste reversible Verbindung mit dem zu verbindenden Maschinenbauteil entsteht
**dadurch gekennzeichnet, dass** das in dem mindestens einen Verdrängungsraum (22) (23) eingesetzte Verdrängungsmedium (6)(6a) ein insgesamt wirksames Elastizitätsmodul von maximal 20% des Elastizitätsmoduls des Materials des Grundkörpers (8) aufweist, und einen insgesamt wirksamen Ausdehnungskoeffizienten besitzt, der von dem Ausdehnungskoeffizienten des Grundkörpers um maximal 10% abweicht,
wobei das Verdrängungsmedium (6)(6a) eine einzige Komponente ist oder ein Gemisch ist aus mindestens zwei Komponenten mit jeweils unterschiedlichen Elastizitätsmoduln und / oder Ausdehnungskoeffizienten.

2. Werkstück nach Anspruch 1, **dadurch gekennzeichnet, dass** der Ausdehnungskoeffizient des Verdrängungsmediums (6) um 0 - 5% von dem des Grundkörpers (8) abweicht.

3. Werkstück nach Anspruch 1 oder 2, **dadurch gekennzeichnet, dass** das Elastizitätsmodul des Verdrängungsmediums (6) 0.001% - 15% des Elastizitätsmoduls des Grundkörpers (8) beträgt.

4. Werkstück nach einem der Ansprüche 1 - 3, **dadurch gekennzeichnet, dass** der Verdrängungsraum (22)(23) ein Länge l₂ in axialer Richtung aufweist, welche maximal 25% größer oder maximal 25% kleiner ist als die Länge l₁, welche der Länge der gemeinsamen Pressfläche (9) entspricht.

5. Werkstück nach einem der Ansprüche 1 - 4, **dadurch gekennzeichnet, dass** Verhältnis (l₃) / (d₁) 0.05 bis 3 beträgt, wobei (l₃) der Abstand zwischen Pressfläche (9) und Außenfläche Verdrängungsraum (22)(23) und (d₁) der Durchmesser des Verdrängungsraums (22) (23) ist.

6. Werkstück nach einem der Ansprüche 1 - 5, **dadurch gekennzeichnet, dass** das Verhältnis Durchmesser (d₁) des Verdrängungsraums (22) zu Durchmesser (d₂) des Druckstempels (4) 1.01 bis 5.0 beträgt.

7. Werkstück nach einem der Ansprüche 1 - 6, **dadurch gekennzeichnet, dass** der mindestens eine Verdrängungsraum (22) (23) in dem sich das Verdrängungsmedium (6) (6a) befindet, im Wesentlichen eine zylindrische, konische oder ringförmige Gestalt aufweist, und der Druckstempel (4) so gestaltet ist, dass er passgenau in den zylindrischen, konischen oder ringförmigen Verdrängungsraum ganz oder teilweise Platz findet.

8. Werkstück nach einem der Ansprüche 1 - 7, **dadurch gekennzeichnet, dass** der Grundkörper (8) einen ersten Verdrängungsraum (22) mit einem Verdrängungsmedium (6) und mindestens einen zweiten Verdrängungsraum (23) mit einem Verdrängungsmedium (6a) aufweist, wobei ein Verdrängungsmedium einen höheren Ausdehnungskoeffizienten und das andere Verdrängungsmedium einen niedrigeren Ausdehnungskoeffizienten besitzt als der Grundkörper (8).

9. Werkstück nach Anspruch 8, **dadurch gekennzeichnet, dass** eines der beiden Verdrängungsmedien (6)(6a) einen Ausdehnungskoeffizienten von < 11x10⁻⁶/K aufweist.

10. Werkstück nach Anspruch 8 oder 9, **dadurch gekennzeichnet, dass** der erste Verdrängungsraum (22) von ringförmiger Gestalt ist und entlang des Umfangs des Grundkörpers (8) in dessen Inneren angeordnet ist, und der zweite Verdrängungsraum (23) ein Hohlzylinder ist, der konzentrisch platziert ist, wobei der erste ringförmige Verdrängungsraum um den zweiten zylindrischen Verdrängungsraums (23) angeordnet ist.

11. Werkstück nach einem der Ansprüche 1 - 10, **dadurch gekennzeichnet, dass** der Grundkörper (8) aus einem Material besteht mit einem Elastizitätsmodul in einem Bereich zwischen 70.000 und 300.000 N/mm².

12. Werkstück nach einem der Ansprüche 1 - 11, **dadurch gekennzeichnet, dass** das Verdrängungsmedium (6)(6a) ein Gemisch aus mindestens zwei Komponenten ist und eine Komponente Graphit, Quarzglas, Glasfaser oder Eisen-Nickel-Legierung aufweist.

13. Werkstück nach einem der Ansprüche 1 - 11, **dadurch gekennzeichnet, dass** das Verdrängungsmedium (6)(6a) ein Gemisch aus mindestens zwei Komponenten ist und eine Komponente ein Kunststoff, ein Kunststoffgemisch oder ein Elastomer ist.

14. Werkstück nach einem der Ansprüche 1 - 11, **dadurch gekennzeichnet, dass** das Verdrängungsmedium (6)(6a) ein Gemisch aus mindestens zwei Komponenten ist und eine Komponente Graphit, Quarzglas, Glasfaser oder Eisen-Nickel-Legierung aufweist, und eine weitere Komponente ein Kunststoff, ein Kunststoffgemisch oder ein Elastomer ist, und der Grundkörper (8) im wesentlich aus einem Material mit einem E-Modul zwischen 70.000 und 300.000 N/mm² besteht.

15. Werkstück nach Anspruch 14, **dadurch gekennzeichnet, dass** das Verdrängungsmedium (6)(6a) ein binäres Gemisch ist, wobei die beiden Komponenten ausgewählt sind aus der Gruppe bestehend aus:
(i) Polyester, PVC oder Elastomer und Quarzglas oder Glasfaser
(ii) Polyester, PVC oder Elastomer und Eisen-Nickel-Legierung
(iii) Polyester, PVC oder Elastomer und Graphit
(iv) Epoxidharz und Graphit
(v) Glykole oder Öle und Graphit.

16. Werkstück nach einem der Ansprüche 12 - 15, **dadurch gekennzeichnet, dass** das Verdrängungsmedium zu 60 - 98% Graphit oder Quarzglas oder Eisen-Nickel-Legierung aufweist.

17. Verwendung eines Werkstückes gemäß einem der Ansprüche 1 - 16 für die feste Montage, insbesondere zur Herstellung von Wellen-Naben-Verbindungen, und für die zerstörungsfreie Demontage von Maschinenbauteilen in Vorrichtungen und Anlagen, welche mittleren bis großen Kräften ausgesetzt sind, insbesondere Windkraftanlagen.

18. Windkraftanlage, **dadurch gekennzeichnet, dass** sie ein Werkstück gemäß einem der Ansprüche 1 - 16 aufweist.

## Claims

1. Workpiece which is reversibly deformable by pressure for the strong reversible connection of machine components, comprising:
(i) an essentially cylindrical base body (8) which has on its periphery a pressing area (9) against an area of the machine component (7) to be connected,
(ii) at least one displacement space (22) (23) in the interior of the base body, which is fully or partly filled with a displacement medium (6)(6a) in powder form or granulated form,
(iii) pressure and tensioning means (1) (2) (3) (5) (14) - (20), and
(iv) at least one pressure ram (4) which is designed in shape and size in such a way that it can be pushed into the displacement space by means of the pressure and tensioning means in order to compress the displacement medium located therein, causing an expansion of the periphery of the base body over the pressing area (9) and thus formation of a very strong reversible connection to the machine component to be connected,
**characterised in that** the displacement medium (6)(6a) employed in the at least one displacement space (22) (23) has a total effective modulus of elasticity of at most 20% of the modulus of elasticity of the material of the base body (8) and has a total effective coefficient of expansion which deviates by a maximum of 10% from the coefficient of expansion of the base body,
where the displacement medium (6)(6a) is a single component or is a mixture of at least two components, each with different moduli of elasticity and/or coefficients of expansion.

2. Workpiece according to Claim 1, **characterised in that** the coefficient of expansion of the displacement medium (6) differs by 0 - 5% from that of the base body (8).

3. Workpiece according to Claim 1 or 2, **characterised in that** the modulus of elasticity of the displacement medium (6) is 0.001% - 15% of the modulus of elasticity of the base body (8).

4. Workpiece according to one of Claims 1 - 3, **characterised in that** the displacement space (22)(23) has a length l₂ in the axial direction which is a maximum of 25% larger or a maximum of 25% smaller than the length l₁ which corresponds to the length of the common pressing area (9).

5. Workpiece according to one of Claims 1 - 4, **characterised in that** the ratio (l₃) / (d₁) is 0.05 to 3, where (l₃) is the separation between pressing area (9) and outside surface of displacement space (22)(23) and (d₁) is the diameter of the displacement space (22) (23).

6. Workpiece according to one of Claims 1 - 5, **characterised in that** the ratio of the diameter (d₁) of the displacement space (22) to the diameter (d₂) of the pressure ram (4) is 1.01 to 5.0.

7. Workpiece according to one of Claims 1 - 6, **characterised in** the at least one displacement space (22) (23) in which the displacement medium (6) (6a) is located essentially has a cylindrical, conical or annular shape, and the pressure ram (4) is designed in such a way that it fully or partly fits precisely into the cylindrical, conical or annular displacement space.

8. Workpiece according to one of Claims 1 - 7, **characterised in that** the base body (8) has a first displacement space (22) containing a displacement medium (6) and at least one second displacement space (23) containing a displacement medium (6a), where one displacement medium has a higher coefficient of expansion and the other displacement medium a lower coefficient of expansion than the base body (8).

9. Workpiece according to Claim 8, **characterised in that** one of the two displacement media (6)(6a) has a coefficient of expansion of < 11x10⁻⁶/K.

10. Workpiece according to Claim 8 or 9, **characterised in that** the first displacement space (22) has an annular shape and is arranged along the periphery of the base body (8) in its interior, and the second displacement space (23) is a hollow cylinder which is positioned concentrically, where the first annular displacement space is arranged around the second cylindrical displacement space (23).

11. Workpiece according to one of Claims 1 - 10, **characterised in that** the base body (8) consists of a material having a modulus of elasticity in a range between 70,000 and 300,000 N/mm².

12. Workpiece according to one of Claims 1 - 11, **characterised in that** the displacement medium (6)(6a) is a mixture of at least two components and one component comprises graphite, quartz, glass fibres or iron/nickel alloy.

13. Workpiece according to one of Claims 1 - 11, **characterised in that** the displacement medium (6)(6a) is a mixture of at least two components and one component is a plastic, a plastic mixture or an elastomer.

14. Workpiece according to one of Claims 1 - 11, **characterised in that** the displacement medium (6)(6a) is a mixture of at least two components and one component comprises graphite, quartz, glass fibres or iron/nickel alloy, and a further component is a plastic, a plastic mixture or an elastomer, and the base body (8) essentially consists of a material having a modulus of elasticity between 70,000 and 300,000 N/mm².

15. Workpiece according to Claim 14, **characterised in that** the displacement medium (6)(6a) is a binary mixture, where the two components are selected from the group consisting of:
(i) polyester, PVC or elastomer and quartz or glass fibres
(ii) polyester, PVC or elastomer and iron/nickel alloy
(iii) polyester, PVC or elastomer and graphite
(iv) epoxy resin and graphite
(v) glycols or oils and graphite.

16. Workpiece according to one of Claims 12 - 15, **characterised in that** the displacement medium comprises 60 - 98% of graphite or quartz or iron/nickel alloy.

17. Use of a workpiece according to one of Claims 1 - 16 for sturdy assembly, in particular for the production of shaft/hub connections, and for the non-destructive disassembly of machine components in devices and installations which are subjected to moderate to large forces, in particular wind turbines.

18. Wind turbine, **characterised in that** it contains a workpiece according to one of Claims 1 - 16.

## Revendications

1. Pièce à usiner qui peut être déformée de façon réversible par pression dans le but de la connexion forte et réversible de composants de machine, comprenant :
(i) un corps de base essentiellement cylindrique (8) qui comporte, sur sa périphérie, une zone de pression (9) contre une zone du composant de machine (7) qui doit être connecté,
(ii) au moins un espace de déplacement (22) (23) dans l'intérieur du corps de base, lequel est complètement ou partiellement rempli d'un milieu de déplacement (6)(6a) sous forme pulvérulente ou sous forme granulée,
(iii) un moyen de pression et de tension (1) (2) (3) (5) (14) - (20), et
(iv) au moins un plateau de compression (4) qui est conçu en termes de forme et de dimension de telle sorte qu'il puisse être poussé à l'intérieur de l'espace de déplacement au moyen du moyen de pression et de tension afin de comprimer le milieu de déplacement qui est localisé en son sein, ce qui engendre une dilatation de la périphérie du corps de base au-dessus de la zone de pression (9) et par conséquent, la formation d'une connexion très forte et réversible sur le composant de machine qui doit être connecté,
**caractérisée en ce que** le milieu de déplacement (6)(6a) qui est utilisé dans l'au moins un espace de déplacement (22) (23) présente un module d'élasticité effectif total d'au plus 20 % du module d'élasticité du matériau du corps de base (8) et présente un coefficient de dilation effectif total qui est dévié d'un maximum de 10 % par rapport au coefficient de dilatation du corps de base,
dans laquelle le milieu de déplacement (6)(6a) est un unique composant ou est un mélange d'au moins deux composants, dont chacun présente des modules d'élasticité différents et/ou des coefficients de dilatation différents.

2. Pièce à usiner selon la revendication 1, **caractérisée en ce que** le coefficient de dilatation du milieu de déplacement (6) diffère de 0 % à 5 % de celui du corps de base (8).

3. Pièce à usiner selon la revendication 1 ou 2, **caractérisée en ce que** le module d'élasticité du milieu de déplacement (6) est compris entre 0,001 % et 15 % du module d'élasticité du corps de base (8).

4. Pièce à usiner selon l'une des revendications 1 à 3, **caractérisée en ce que** l'espace de déplacement (22)(23) présente une longueur l₂ dans la direction axiale qui est au maximum 25 % plus grande ou au maximum 25 % plus petite que la longueur l₁ qui correspond à la longueur de la zone de pression commune (9).

5. Pièce à usiner selon l'une des revendications 1 à 4, **caractérisée en ce que** le rapport (l₃)/(d₁) est compris entre 0,05 et 3, où (l₃) est la séparation entre la zone de pression (9) et une surface extérieure de l'espace de déplacement (22)(23) et (d₁) est le diamètre de l'espace de déplacement (22) (23).

6. Pièce à usiner selon l'une des revendications 1 à 5, **caractérisée en ce que** le rapport du diamètre (d₁) de l'espace de déplacement sur le diamètre (22) (d₂) du plateau de compression (4) est compris entre 1,01 et 5,0.

7. Pièce à usiner selon l'une des revendications 1 à 6, **caractérisée en ce que** l'au moins un espace de déplacement (22) (23) à l'intérieur duquel le milieu de déplacement (6) (6a) est localisé présente essentiellement une forme cylindrique, conique ou annulaire, et le plateau de compression (4) est conçu de telle sorte qu'il soit ajusté complètement ou partiellement de façon précise à l'intérieur de l'espace de déplacement cylindrique, conique ou annulaire.

8. Pièce à usiner selon l'une des revendications 1 à 7, **caractérisée en ce que** le corps de base (8) comporte un premier espace de déplacement (22) qui contient un milieu de déplacement (6) et au moins un second espace de déplacement (23) qui contient un milieu de déplacement (6a), où un milieu de déplacement présente un coefficient de dilatation plus élevé et l'autre milieu de déplacement présente un coefficient de dilatation plus faible que le corps de base (8).

9. Pièce à usiner selon la revendication 8, **caractérisée en ce que** l'un des deux milieux de déplacement (6)(6a) présente un coefficient de dilatation < 11x10⁻⁶/K.

10. Pièce à usiner selon la revendication 8 ou 9, **caractérisée en ce que** le premier espace de déplacement (22) présente une forme annulaire et est agencé le long de la périphérie du corps de base (8) dans son intérieur, et le second espace de déplacement (23) est un cylindre creux qui est positionné de façon concentrique, où le premier espace de déplacement annulaire est agencé autour du second espace de déplacement cylindrique (23).

11. Pièce à usiner selon l'une des revendications 1 à 10, **caractérisée en ce que** le corps de base (8) est constitué par un matériau qui présente un module d'élasticité qui s'inscrit à l'intérieur d'une plage entre 70 000 et 300 000 N/mm².

12. Pièce à usiner selon l'une des revendications 1 à 11, **caractérisée en ce que** le milieu de déplacement (6)(6a) est un mélange d'au moins deux composants et un composant comprend du graphite, du quartz, des fibres de verre ou un alliage de fer/nickel.

13. Pièce à usiner selon l'une des revendications 1 à 11, **caractérisée en ce que** le milieu de déplacement (6)(6a) est un mélange d'au moins deux composants et un composant est une matière plastique, un mélange de matières plastiques ou un élastomère.

14. Pièce à usiner selon l'une des revendications 1 à 11, **caractérisée en ce que** le milieu de déplacement (6)(6a) est un mélange d'au moins deux composants et un composant comprend du graphite, du quartz, des fibres de verre ou un alliage de fer/nickel, et un autre composant est une matière plastique, un mélange de matières plastiques ou un élastomère, et le corps de base (8) est constitué essentiellement par un matériau qui présente un module d'élasticité entre 70 000 et 300 000 N/mm².

15. Pièce à usiner selon la revendication 14, **caractérisée en ce que** le milieu de déplacement (6)(6a) est un mélange binaire, où les deux composants sont sélectionnés parmi le groupe qui est constitué par :
(i) polyester, PVC ou élastomère et quartz ou fibres de verre
(ii) polyester, PVC ou élastomère et alliage de fer/nickel
(iii) polyester, PVC ou élastomère et graphite
(iv) résine époxy et graphite
(v) glycols ou huiles et graphite.

16. Pièce à usiner selon l'une des revendications 12 à 15, **caractérisée en ce que** le milieu de déplacement comprend de 60 % à 98 % de graphite ou de quartz ou d'un alliage de fer/nickel.

17. Pièce à usiner selon l'une des revendications 12 à 16 pour un assemblage robuste, en particulier pour la fabrication de connexions arbre/moyeu, et pour le désassemblage non destructif de composants de machine dans les dispositifs et les installations qui sont soumis à des forces modérées à importantes, en particulier les éoliennes.

18. Éolienne, **caractérisée en ce qu'**elle contient une pièce à usiner selon l'une des revendications 1 à 16.
